# EUROPEAN PATENT SPECIFICATION

(11) **EP 3 888 171 B1**
(45) Date of publication and mention of the grant of the patent: **04.12.2024**
(21) Application number: 19894401.9
(22) Date of filing: 09.12.2019
(51) Int. Cl.: H01M 8/06, H01M 8/14

(54) **METHOD FOR PRODUCING HYDROGEN AND GENERATING ELECTRICAL POWER**
VERFAHREN ZUR ERZEUGUNG VON WASSERSTOFF UND ERZEUGUNG ELEKTRISCHER ENERGIE
PROCÉDÉ DE PRODUCTION D'HYDROGÈNE ET DE PRODUCTION D'ÉNERGIE ÉLECTRIQUE

(30) Priority: 14.12.2018 US 201862780084 P
(43) Date of publication of application: 06.10.2021
(73) Proprietor: Ekona Power Inc., Burnaby, British Columbia, V5A 2H5 (CA)
(72) Inventor: REID, Christopher Edwin John, Vancouver, British Columbia V6B 1H4 (CA); LEBOE, David Aaron, Vancouver, British Columbia V6B 1H4 (CA); KRATSCHMAR, Kenneth William, Vancouver, British Columbia V6B 1H4 (CA); SCHUBAK, Gary Edward, Vancouver, British Columbia V6B 1H4 (CA)
(74) Representative: St Clair Jones, Gregory Arthur Langley
(86) International application number: PCT/CA2019/051770
(87) International publication number: WO 2020/118420

(56) References cited:
- KR-B1- 101 897 031
- KR-B1- 101 897 031
- US-A1- 2004 253 168
- US-A1- 2004 253 168
- US-A1- 2004 265 651
- US-A1- 2004 265 651
- US-A1- 2006 057 443
- US-A1- 2006 057 443
- US-A1- 2011 120 137
- US-A1- 2011 120 137
- US-A1- 2011 120 138
- US-A1- 2011 120 138
- MEYER STEINBERG: "An Innovative Highly Efficient Combined Cycle Fossil and Biomass Fuel Power Generation and Hydrogen Production Plant with Zero CO 2 Emission", BROOKHAVEN NATIONAL LABORATORY, 1 March 2003 (2003-03-01), pages 1 - 18, XP055719129, Retrieved from the Internet <URL:https://www.hceco.com/ste303.pdf> [retrieved on 20200730]
- K. HEMMES ET AL: "Modeling of a Direct Carbon Fuel Cell System", JOURNAL OF FUEL CELL SCIENCE AND TECHNOLOGY, vol. 7, no. 5, 1 October 2010 (2010-10-01), US, XP055719132, ISSN: 1550-624X, DOI: 10.1115/1.4001015
- MEYER STEINBERG: "An Innovative Highly Efficient Combined Cycle Fossil and Biomass Fuel Power Generation and Hydrogen Production Plant with Zero CO 2 Emission", BROOKHAVEN NATIONAL LABORATORY, 1 March 2003 (2003-03-01), pages 1 - 18, XP055719129, Retrieved from the Internet <URL:https://www.hceco.com/ste303.pdf> [retrieved on 20200730]
- K. HEMMES, M. HOUWING, N. WOUDSTRA: "Modeling of a Direct Carbon Fuel Cell System", JOURNAL OF FUEL CELL SCIENCE AND TECHNOLOGY, ASME INTERNATIONAL,, US, vol. 7, no. 5, 1 October 2010 (2010-10-01), US, XP055719132, ISSN: 1550-624X, DOI: 10.1115/1.4001015
- DAGLE: "R&D Opportunities for Development of Natural Gas Conversion Technologies for Co-Production of Hydrogen and Value-Added Solid Carbon Products", U.S. DEPARTMENT OF ENERGY, 1 November 2017 (2017-11-01), pages 1 - 73, XP055719135

## Description

### TECHNICAL FIELD

The present disclosure relates to a method and a system for producing hydrogen and generating electrical power.

### BACKGROUND

Conventional methods for hydrogen generation and/or power production result in significant dilute CO₂ flue streams. Producing clean H₂ or power often requires adding costly cleanup systems to concentrate or capture the CO₂ in the flue stream so that it is suitable for sequestration. Currently, this processing of flue gases is cost prohibitive.

Current methods of producing clean H₂ are therefore much higher in cost than the incumbent method of steam methane reforming (SMR) which produces significant dilute CO₂ emissions. Prior art US2004/265651 discloses a direct carbon fuel cell (DCFC) based arrangement for producing electric power and H₂ gas, running on hydrocarbon fuel and using a plasma or dissociation reactor for separating the fuel into H2 gas as a bi-product and molten carbon for the DCFC.

There is therefore a need in the art to produce clean industrial H₂ at a cost at or better than existing methods.

### SUMMARY

According to the invention, there is provided, according to claim 1, a system for producing hydrogen and generating electrical power, comprising: a heat exchanger; a hydrocarbon dissociation reactor; a carbon separator; a direct carbon fuel cell (DCFC) comprising an anode and an electrolyte flow field; and a fluid circulation system configured to: circulate a hydrocarbon fuel source to the heat exchanger for heating the hydrocarbon fuel source in the heat exchanger; circulate the heated hydrocarbon fuel source to the hydrocarbon dissociation reactor for decomposing the hydrocarbon fuel source into hydrogen and carbon; circulate the hydrogen and carbon to the carbon separator for separating the carbon from the hydrogen; circulate a molten carbonate electrolyte to the carbon separator for mixing with the separated carbon to form a slurry; circulate the slurry to the electrolyte flow field of the DCFC for converting in the anode of the DCFC at least some carbon comprised in the slurry to carbon dioxide and electrical power, thereby forming a carbon-depleted slurry; circulate the carbon-depleted slurry away from the DCFC; and circulate one or more of the carbon-depleted slurry, the molten carbonate electrolyte, and carbon dioxide from the DCFC to the heat exchanger.

The invention provides further improvements according to the dependent claims 2-13, as well as a corresponding method according to claim 14.

The system may comprise any of the features described herein, and in particular any of the features described above in connection with the method for producing hydrogen.

This summary does not necessarily describe the entire scope of all aspects. Other aspects, features and advantages will be apparent to those of ordinary skill in the art upon review of the following description of specific embodiments.

### BRIEF DESCRIPTION OF THE DRAWINGS

Embodiments of the disclosure will now be described in detail in conjunction with the accompanying drawings of which:

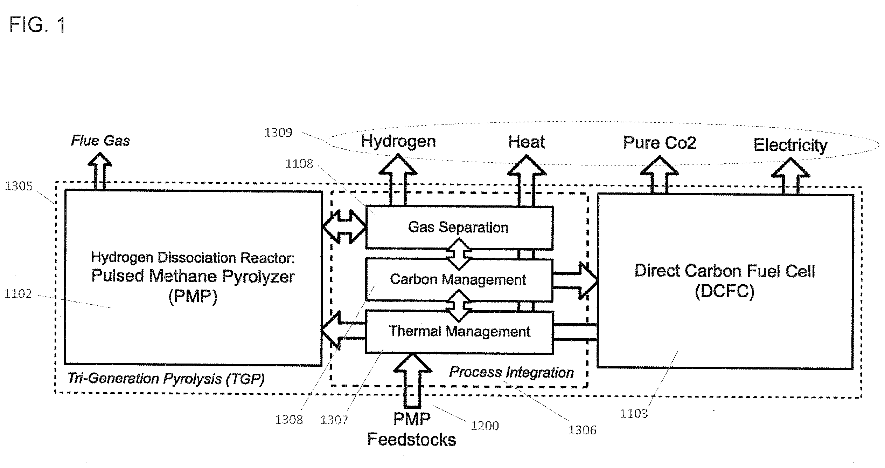

FIG. 1 is a schematic drawing representing a process of tri-generation pyrolysis, according to embodiments of the disclosure;

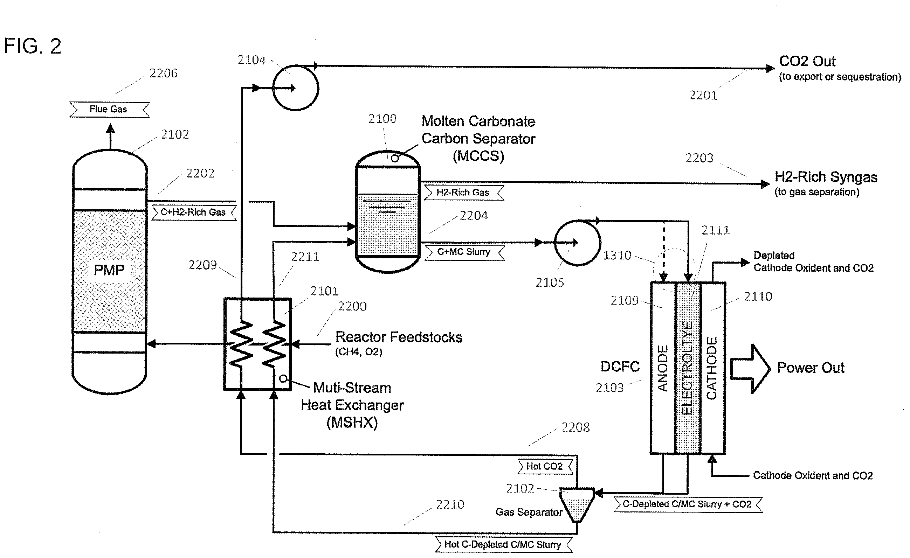

FIG. 2 is a block diagram of a system for producing hydrogen and generating electrical power, according to embodiments of the disclosure. Molten carbonate is used to separate solid carbon from hydrogen-rich gas and circulated as a carbon slurry to a direct carbon fuel cell where the slurry serves as fuel, electrolyte, and coolant.

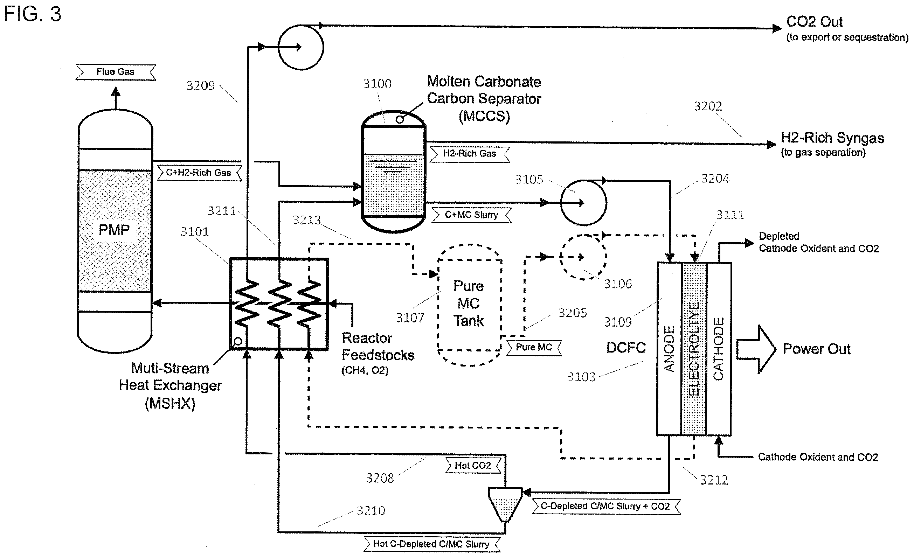

FIG. 3 is a block diagram of a system for producing hydrogen and generating electrical power, according to embodiments of the disclosure. Molten carbonate is used to separate solid carbon from hydrogen-rich gas and circulated as a carbon slurry to a direct carbon fuel cell where the slurry serves as a fuel stream.

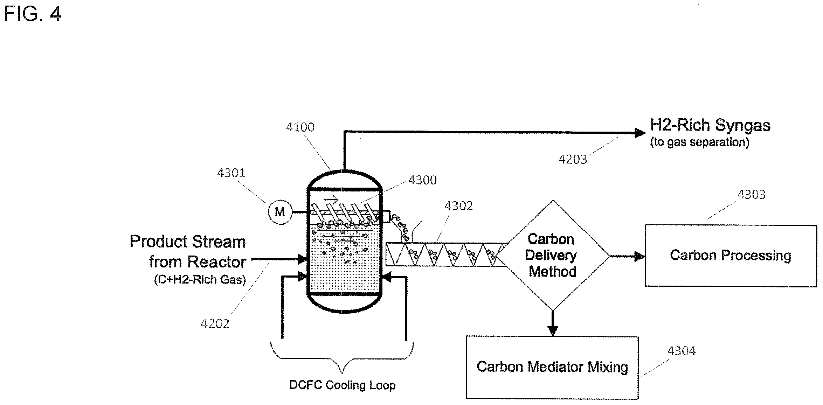

FIG. 4 is a block diagram of a system for producing hydrogen and generating electrical power, according to embodiments of the disclosure. Solid carbon is removed from a carbon separator and externally processed by multiple methods for multiple uses including carbon export and for a direct carbon fuel cell fuel.

### DETAILED DESCRIPTION

The present disclosure seeks to provide an improved method of producing hydrogen and generating electrical power. While various embodiments of the disclosure are described below, the disclosure is not limited to these embodiments, and variations of these embodiments may well fall within the scope of the disclosure which is to be limited only by the appended claims.

The present disclosure describes a Tri-Generation Pyrolysis (TGP) technology designed to produce industrial-scale, clean H₂, electrical power, heat, and a pure stream of CO₂ that can be either easily sequestered or sold as a feedstock to other industrial processes. According to some embodiments, the TGP comprises a hydrogen dissociation reactor (HDR), a direct carbon fuel cell (DCFC), a molten carbonate carbon separator (MCCS), and a multi-stream heat exchanger (MSHX). An objective is to maximize the efficiency of the TGP by optimizing the integration of the HDR, the DCFC, the MCCS, and the MSHX.

Conventional high-temperature carbon fuel cell designs that are based on a molten carbonate electrolyte tend to have a captive electrolyte constrained within a porous separator matrix between an anode and a cathode. The electrolyte is static and does not flow in or out of the fuel cell. In such a cell, cooling is performed by the cathode flow of oxidant and carbon dioxide. Such cells are prone to electrolyte loss and degradation which necessitates frequent servicing. Flowing a common electrolyte to the fuel cells in parallel mitigates problematic electrolyte servicing and enables a direct medium to manage the temperature of the fuel cell. Flowing an electrolyte further enables a higher degree of system integration when a solid carbon fuel is supplied by an HDR.

Key challenges of integrating such a system include the effective separation of the solid carbon from the HDR product stream and its delivery to the DCFC. Efficiently providing the heating and cooling requirements of various subsystems presents additional challenges. The present disclosure proposes a novel integration of the carbon carrier function to fuel the DCFC, the carbon separation function from the HDR, the pre-heating function of the hydrocarbon feedstock to the HDR, and the cooling function of the DCFC.

Throughout this disclosure, the term "direct carbon fuel cell" (DCFC) may refer to a fuel cell using a carbon-rich material as a feedstock or fuel. The DCFC may generate energy using carbon and oxygen, with carbon dioxide as a by-product.

Throughout this disclosure, the term "pyrolysis" may refer to the act of decomposing material at elevated temperatures in an inert atmosphere.

Throughout this disclosure, the term "electrolyte" may refer to a substance that possesses ionic conductance properties.

Throughout this disclosure, the term "PSA" may refer to pressure swing adsorption, which is a technique used for purifying gases such as hydrogen.

Embodiments of the disclosure may provide for the generation of hydrogen, power, high-grade heat, and a near pure stream of CO₂. Furthermore, embodiments of the disclosure may provide for the integration of: a hydrocarbon dissociation reactor producing both solid carbon and a hydrogen (H₂) rich gas; a direct carbon fuel cell (DCFC) that uses the produced carbon to generate electrical power and heat; a carbon separator; and a gas separator that separates the solid carbon and purifies the H₂ from the gas mixture exiting the hydrogen dissociation reactor.

Embodiments of the disclosure may assist in producing clean H₂ and clean dispatchable electrical power at a cost at or lower than the incumbent technologies. A tri-generation pyrolysis process (TGP) or TGP-like system, according to embodiments of the disclosure, can be deployed at sites requiring low cost and clean industrial H₂ such as upgrading/refining operations, ammonia and other chemical production, steel and glass making, etc., as well as for low-cost clean transportation and for large-scale H₂ export applications. In addition, a TGP or TGP-like systems, according to embodiments of the disclosure, can be deployed to produce clean electric power for dispatchable applications.

Embodiments of the disclosure may perform hydrogen dissociation which may comprise a pulsed methane pyrolyzer (PMP) to convert a hydrocarbon feedstock into carbon and an H₂-rich gas. The PMP may be a pyrolyzer as described in co-pending PCT Patent Application No. PCT/CA2019/051765 filed on December 9, 2019, in the name of Ekona Power Inc., and entitled "Method and Reactor for Producing One or More Products". For example, the PMP may comprise a feedstock gas reactor comprising: a mixing chamber; a combustion chamber; valving for controlling flow of gases into and out of the mixing chamber and the combustion chamber; an igniter; and one or more controllers configured to perform a method comprising: controlling the valving to introduce a feedstock gas (such as CH₄ and O₂ (or air)) into the mixing chamber, wherein the feedstock gas comprises one or more gases; controlling the valving to introduce a combustible gas into the combustion chamber, wherein the combustible gas comprises one or more gases; and thereafter, controlling the igniter to ignite the combustible gas so as to cause the combustible gas to flow into the mixing chamber via one or more fluid flow paths between the combustion chamber and the mixing chamber, and to mix with the feedstock gas, wherein energy is transferred from the combustible gas to the feedstock gas and thereby causes one or more products to be produced. The one or more products may comprise carbon, H₂-rich syngas (H₂, CH₄, CO, CO₂), H₂0, and nitrogen.

A molten salt carbon carrier may be used in a DCFC and may also be used to separate the carbon and the H₂-rich gas from the PMP. The same molten salt/carbon carrier may be used to transfer heat to the hydrocarbon input of the PMP. The DCFC may be a DCFC as described in co-pending PCT Patent Application No. PCT/CA2019/051767 filed on December 9, 2019, in the name of Ekona Power Inc., and entitled "Molten Carbonate Direct Carbon Fuel Cell Systems and Methods". For example, the DCFC may comprise: a plurality of fuel cells, each fuel cell comprising a porous fuel cell anode and a fuel cell cathode; a molten carbonate electrolyte; a fuel supply apparatus for flowing a fuel slurry comprising carbon particles and a carbon carrier fluid to the fuel cell anodes in parallel, wherein the carbon carrier fluid has a same composition as the molten carbonate electrolyte; an oxidant supply apparatus for flowing an oxygen-containing stream to the fuel cell cathodes in parallel; and an electrolyte circulation apparatus for circulating the molten carbonate electrolyte in contact with each of the plurality of fuel cells, wherein, during operation of the direct carbon fuel cell system to generate electric power, carbon is oxidized at the fuel cell anodes to produce carbon dioxide, and at the fuel cell cathodes oxygen and carbon dioxide react to produce carbonate ions.

Embodiments of the disclosure may use a pulsed methane pyrolyzer (PMP) for a hydrogen dissociation reactor. Furthermore, according to embodiments of the disclosure, there is described a system that integrates the separation of carbon and H₂-rich gas with electrolyte and fuel feeds for the DCFC, pre-heating of the hydrocarbons into the PMP, and cooling for the DCFC.

According to embodiments of the disclosure, the DCFC reactor may be externally fuelled with, for example, a slurry mixture of carbon and molten salt electrolyte.

According to embodiments of the disclosure, the system may integrate the separation of carbon and H₂-rich gas by using a molten electrolyte and/or molten carbon carrier to separate the carbon from the H₂-rich gas and for combining the carbon fuel feed with the molten electrolyte to be fed to the DCFC. As well, the molten electrolyte / carbon carrier stream may be used for cooling the DCFC and the pre-heating of the hydrocarbon feedstock into the dissociation reactor.

According to embodiments of the disclosure, the PMP may use a single stage thermal pyrolysis reaction to convert feedstock hydrocarbons into carbon and H₂-rich gas. According to embodiments of the disclosure, the system may also comprise a DCFC to produce electrical power and high-grade heat.

Each embodiment of the present disclosure may offer one or more of the following: optimization of the separation of solid carbon from the H₂ and other gases that have exited the PMP; optimization of the mixing of the solid carbon with a molten electrolyte (or other suitable carbon carrier fluid) as a fuel for the DCFC anode; and optimization of the heat utilization and cooling requirements among the PMP, DCFC, MCCS and hydrogen gas separator.

Producing industrial H₂ at a cost at or better than the incumbent process may require the co-generation of valuable commodities to offset the cost of the clean H₂ production. According to embodiments of the disclosure, a Tri-Generation Pyrolysis (TGP) technology may be used produce industrial H₂, electrical power, high-grade heat, and a pure stream of CO₂ that can be either easily sequestered or sold as a feedstock to other industrial processes. The TGP may include a PMP, DCFC, carbon separator, and hydrogen gas separator configured to provide an integrated process. The efficiency of the TGP can be maximized by optimizing the integration of the PMP and DCFC, and the carbon separator and hydrogen gas separator.

Referring to FIG. 1 which depicts a tri-generation pyrolysis process (TGP) 1305 according to an embodiment of the disclosure, H₂-rich gas and solid carbon are produced in the PMP 1102 from a suitable hydrocarbon feedstock 1200 (e.g. natural gas (NG)). The carbon and the H₂-rich gas are separated in the carbon management subsystem 1308 after which the H₂-rich gas stream is fed to a gas separator 1108 where the H₂ is purified to industrial process specifications. The rejected gas from the gas separator 1108 is recycled back to the PMP 1102 where some is burned to provide the heat of reaction required for the thermal pyrolysis process. The carbon is fed to the DCFC 1103 by means of a carbon management subsystem 1308 where it is combined with the carbon carrier and fed to the DCFC anode. Oxygen, O₂, is introduced via air to the cathode of the DCFC 1103 and the carbon and O₂ are electrochemically converted into electrical power, heat, and a pure stream of CO₂ 1309.

Some challenges of integrating such a system may relate to efficiently separating and managing the carbon fuel, and efficiently providing the heating and cooling requirements of the various subsystems. Embodiments of the disclosure may involve a process that integrates the functions of the various TGP subsystems to substantially reduce the overall complexity and cost. Specifically, embodiments of the disclosure may integrate (a) the carbon carrier function to fuel the DCFC anode, (b) the carbon separation function from the PMP 1102, (c) the pre-heating function of the hydrocarbon feedstock to the PMP 1102, and (d) the cooling function of the DCFC 1103.

Each embodiment of the present disclosure offers one or more of the following: optimization of the separation of solid carbon from the H₂ and other gases that have exited the PMP; optimization of the mixing of the solid carbon with a molten electrolyte (or other suitable carbon carrier fluid) as a fuel for the DCFC anode; and optimization of the heat utilization and cooling requirements among the PMP, DCFC, MCCS and hydrogen gas separator.

Referring to FIG 2, there are shown according to an embodiment of the disclosure a molten carbonate carbon separator (MCCS) 2100 and a multi-stream heat exchanger (MSHX) 2101 for integrating a hydrocarbon dissociation pulsed methane pyrolysis reactor (PMP) 2102 with a DCFC 2103. In particular, MCCS 2100 uses a circulating molten fuel mediator that is the same as the DCFC electrolyte from the DCFC 2103 to simplify separating the carbon from H₂-rich gas exiting the PMP 2102 and to simplify the mixing of the carbon with the molten electrolyte, enabling the continuous carbon fuelling function of the DCFC 2103. There is further depicted a Molten Electrolyte Carbon Separator 2100 that uses a circulating molten carbon carrier (fuel mediator) to simplify the separation of the carbon from H₂-rich gas that exits the PMP 2102 and to simplify the mixing of the carbon with the molten carbon carrier, improving the carbon delivery to the DCFC 2103. MSHX 2101 is designed to pre-heat the input hydrocarbon fuel and oxidizing feedstocks 2200 to the PMP 2102 with the hot circulating molten electrolyte 2210 and/or carbon carrier fluid and CO₂ 2208 exiting the DCFC 2103 and to cool the circulating molten electrolyte and/or carbon carrier fluid to provide the required cooling to the DCFC 2103.

Feedstock hydrocarbons 2200 are preheated by the hot molten salt electrolyte 2210 and CO₂ 2208 exiting the DCFC 2103. These hot hydrocarbons are then introduced into the PMP 2102. At the same time, the hot molten salt electrolyte and/or carbon carrier fluid is cooled providing a required heat sink for the circulating electrolyte DCFC operation. The molten salt electrolyte and/or carbon carrier fluid 2211 is pumped to the MCCS 2100. The solid carbon and the produced H₂-rich gas 2202 from the PMP 2102 are sent into the bottom of the molten salt column of the MCCS 2100 where the H₂-rich gas 2203 bubbles to the surface and exits to the H₂ separator PSA to produce industrial grade H₂. In some embodiments, the contents of the MCCS 2100 are stirred in order to entrain the carbon into the electrolyte.

The solid carbon is (i) mixed with the molten electrolyte in the MCCS 2100 to form a slurry 2204 that is sent as fuel to the anode 2109 of the DCFC 2103, or (ii) skimmed off the top of the molten electrolyte column to be formed into solid carbon fuel to be delivered as fuel to the anode 2109 of the DCFC 2103, or (iii) used as a solid carbon product for other applications.

According to the embodiment of FIG. 2, the hydrogen dissociation reactor is a pulsed methane pyrolyzer (PMP) 2102 producing H₂-rich gas and solid carbon 2202. The DCFC 2103 uses a molten carbonate (MC) electrolyte that circulates through the MCCS 2100. The carbon and the H₂-rich gas 2202 from the PMP 2102 are sent to the MCCS 2100 where they are mixed with the molten carbonate electrolyte, the H₂-rich gas 2203 is separated from the carbon, and the remaining carbon and molten carbonate form a carbon/molten carbonate slurry 2204. This carbon/molten carbonate slurry is pumped to the DCFC 2103 where it operates both as the electrolyte and as the carbon fuel for the anode 2109. Some of the carbon is consumed in the DCFC 2103 and the carbon-depleted carbon/molten carbonate slurry 2210 is pumped back to the MCCS 2100 where more carbon and H₂-rich gas from the PMP 2102 are introduced, and the process continues.

The pure CO₂ product 2208 is separated from the depleted carbon/molten carbonate slurry in a gas separator 2102 and is also cooled by the MSHX 2101 and compressed by a CO₂ compressor 2104 for export or sequestration.

According to some embodiments, the DCFC 2103 has separate anode and electrolyte flow fields and inlet headers 1310 to which the carbon/molten carbonate slurry are individually delivered. Alternately, the DCFC 2103 only inputs the carbon/molten carbonate slurry to the electrolyte flow field 2211 where the fuel slurry is supplied. The slurry in this embodiment serves as both the cell electrolyte and mediated fuel for the cell. In some cases, all or a portion of the slurry penetrates and flows through the DCFC anode electrodes 2109 and is independently collected at the outlet of the DCFC 2103.

According to some embodiments, the molten carbonate electrolyte, and/or carbon/molten carbonate slurry and the CO₂ produced in the DCFC 2103 is used to pre-heat the hydrocarbon fluid feedstock going into the PMP 2102. This enables the system to be more efficient by lowering the energy requirement for the PMP 2102 and providing the needed cooling for the DCFC 2103.

The flow of the molten carbonate electrolyte and/or carbon/molten carbonate slurry may be at different pressures, for example, and at temperatures above the solidification temperature of the molten electrolyte.

With reference to FIG 3 which shows a variation of the embodiment of FIG. 2, only a portion of the molten carbonate electrolyte passes through the MCCS 3100 that is used to separate the H₂-rich gas and mixed with the carbon to produce the carbon/molten carbonate slurry. This slurry 3204 is then sent to the anode 3109 of the DCFC 3103 and kept separate from the pure molten carbonate electrolyte 3205. The carbon depleted slurry 3210 is then returned to the MCCS 3100 forming a separate loop from the pure molten carbonate electrolyte.

The DCFC electrolyte 3205 is circulated through the DCFC 3103 and the MSHX 3101 by an independent molten carbonate pump 3105 and buffered in an independent holding tank 3107. In this embodiment, the DCFC fuel slurry and circulating electrolyte are independent fluid streams but each deliver heat to the MSHX 3101. According to this embodiment, the molten carbonate DCFC electrolyte is maintained carbon-free but is still circulated for heat removal from the DCFC 3103.

The DCFC 3103 produces electrical power, high-grade heat, and a mostly pure stream of CO₂ by electrochemically converting the carbon in the carbon/molten carbonate slurry feed at the anode 3109 and the O₂ from the air at the cathode. Most of the carbon is consumed in the DCFC 3103 and the carbon-depleted hot carbon/molten carbonate slurry 3210, and hot CO₂ 3208 is pumped to a multi-stream heat exchanger 3101 where the PMP feedstocks (natural gas and oxidant) are preheated before going into the PMP, and the molten carbonate electrolyte is cooled for the DCFC operation. From the MSHX 3101, the cooler molten carbonate electrolyte 3211 is pumped to the MCCS 3100 where more carbon and H₂-rich gas from the PMP are introduced. The process may then be repeated.

Referring to FIG. 4, there is shown another embodiment where the carbon and the H₂-rich gas 4202 are sent to the MCCS 4100. The carbon is not mixed with the molten carbonate electrolyte but rather floats to the top of the molten carbonate liquid column and is skimmed off, or filtered out. The method of skimming (or filtering) the carbon may be performed according to any of various suitable methods and may use any of various suitable systems. By way of example, an active carbon skimmer 4300 may be driven by a prime mover 4301 and ejected from the MCCS 4100. The solid carbon can be moved by carbon management equipment such as a conveyor 4302 to be further processed as a DCFC fuel. Various carbon processing methods may include forming the carbon into an aggregated solid carbon form 4303 for use as a fuel for the DCFC anode or for mixing with another fluid carrier 4304, such as CO₂, prior to introduction to the DCFC anode. The solid carbon may alternately be removed from the system and processed and/or exported for other applications.

In general, unless otherwise indicated, singular elements may be in the plural and vice versa with no loss of generality.

Throughout the description, specific details have been set forth in order to provide a more thorough understanding of the disclosure. However, the disclosure may be practiced without these particulars. In other instances, well-known elements have not been shown or described in detail and repetitions of steps and features have been omitted to avoid unnecessarily obscuring the disclosure. Accordingly, the specification is to be regarded in an illustrative, rather than a restrictive, sense.

It will be clear to one having skill in the art that further variations to the specific details disclosed herein can be made, resulting in other embodiments that are within the scope of the disclosure. All parameters, materials, and configurations described herein are examples only and actual ones of such depend on the specific embodiment. Accordingly, the scope of the disclosure is to be construed in accordance with the substance defined by the claims.

### GLOSSARY

- 100: Molten Carbonate Carbon Separator (MCCS)
- 101: Multi-Stream Heat Exchanger (MSHX)
- 102: Pulsed Methane Pyrolyzer (PMP)
- 103: Direct Carbon Fuel Cell (DCFC)
- 104: CO2 compressor
- 105: MC/C Slurry Pump
- 106: Pure Molten Carbonate Pump
- 107: Pure Molten Carbonate Tank
- 108: Gas Separator
- 109: DCFC Anode Assembly
- 110: DCFC Cathode Assembly
- 111: DCFC Electrolyte Chamber
- 200: Reactor Feedstocks (CH4, O2)
- 201: Pure CO2 Product
- 202: PMP Product (Carbon + Syngas)
- 203: H2-Rich Syngas
- 204: C/MC Slurry
- 205: Pure Molten Carbonate
- 206: PMP Flue Gas
- 207: C-Depleted C/MC Slurry
- 208: Hot CO2
- 209: Cooled CO2
- 210: Hot C-Depleted C/MC Slurry
- 211: Cooled C-Depleted C/MC Slurry
- 212: Hot Pure Molten Carbonate
- 213: Cooled Pure Molten Carbonate
- 214: DCFC Coolant
- 300: Carbon Skimmer
- 301: Carbon Skimmer Motor
- 302: Carbon Material Handling (Eg. Conveyor)
- 303: Carbon Processing
- 304: Carbon Mediator Mixing
- 305: Overall. TGP Process
- 306: Process Integration
- 307: Thermal Management
- 308: Carbon Management
- 309: TGP Outputs
- 310: DCFC inlet ports

## Claims

1. A system for producing hydrogen and generating electrical power, comprising:
a heat exchanger (2101);
a hydrocarbon dissociation reactor (2102);
a carbon separator (2100);
a direct carbon fuel cell, DCFC, (2103) comprising an anode and an electrolyte flow field; and
a fluid circulation system configured to:
circulate a hydrocarbon fuel source to the heat exchanger for heating the hydrocarbon fuel source in the heat exchanger;
circulate the heated hydrocarbon fuel source to the hydrocarbon dissociation reactor for decomposing the hydrocarbon fuel source into hydrogen and carbon;
circulate the hydrogen and carbon to the carbon separator for separating the carbon from the hydrogen;
circulate a molten carbonate electrolyte to the carbon separator for mixing with the separated carbon to form a slurry;
circulate the slurry to the electrolyte flow field of the DCFC for converting in the anode of the DCFC at least some carbon comprised in the slurry to carbon dioxide and electrical power, thereby forming a carbon-depleted slurry;
circulate the carbon-depleted slurry away from the DCFC; and
circulate one or more of the carbon-depleted slurry, the molten carbonate electrolyte, and carbon dioxide from the DCFC to the heat exchanger.

2. The system of claim 1, wherein the fluid circulation system is further configured to circulate the separated hydrogen to a hydrogen separator for purifying the separated hydrogen.

3. The system of claim 1, wherein the fluid circulation system is further configured to: circulate the slurry to the anode of the DCFC.

4. The system of any one of claims 1-3, wherein the fluid circulation system is further configured to:
maintain further molten carbonate electrolyte between the anode and a cathode of the DCFC without circulating the further molten carbonate.

5. The system of any one of claims 1-4, wherein the fluid circulation system is further configured to circulate an electrolyte in contact with the DCFC and separately to the slurry.

6. The system of any one of claims 1-5, wherein the fluid circulation system is further configured to:
circulate additional carbon and the carbon-depleted slurry to the carbon separator for mixing the additional carbon with the carbon-depleted slurry to form additional slurry; and
circulate the additional slurry to the DCFC.

7. The system of any one of claims 1-6,
wherein the fluid circulation system is further configured to circulate the carbon dioxide and the carbon-depleted slurry to the heat exchanger for cooling the carbon dioxide and the carbon-depleted slurry in the heat exchanger.

8. The system of any one of claims 1-7, further comprising:
a carbon removal device configured to remove the separated carbon from the molten carbonate electrolyte in the carbon separator; and
a carbon transfer device configured to transfer the removed carbon to the DCFC.

9. The system of claim 8, wherein the carbon removal device is further configured to skim or filter the separated carbon from the molten carbonate electrolyte.

10. The system of claim 8 or 9, wherein the fluid circulation system is further configured to:
circulate the molten carbonate electrolyte from the DCFC to the carbon separator.

11. The system of any one of claims 8-10, wherein the fluid circulation system is further configured to:
prior to transfer of the removed carbon to the DCFC, circulate the removed carbon and a fuel mediator to the carbon separator for mixing therein; and
circulate the mixed carbon and fuel mediator to the DCFC.

12. The system of any one of claims 1-11, further comprising a carbon processing apparatus for processing at least some of the separated carbon for export.

13. The system of claim 12, wherein the carbon processing apparatus comprises a reactor for increasing activation of the at least some of the separated carbon, a pelletizer for pelletizing the at least some of the separated carbon, a press, or a kiln.

14. A method for producing hydrogen and generating electrical power, comprising:
heating a hydrocarbon fuel source in a heat exchanger (2101);
decomposing the heated hydrocarbon fuel source into hydrogen and carbon using a hydrocarbon dissociation reactor (2102);
separating the carbon from the hydrogen in a carbon separator (2100);
mixing, in the carbon separator, the separated carbon with a molten carbonate electrolyte to form a slurry;
generating electrical power from the separated carbon by circulating the slurry to an electrolyte flow field of a direct carbon fuel cell, DCFC, (2103);
wherein in an anode of the DCFC at least some carbon comprised in the slurry is converted to carbon dioxide and electrical power, thereby forming a carbon-depleted slurry;
circulating the carbon-depleted slurry away from the DCFC; and
circulating one or more of the carbon-depleted slurry, the molten carbonate electrolyte, and carbon dioxide from the DCFC to the heat exchanger.

## Patentansprüche

1. System zur Erzeugung von Wasserstoff und zur Erzeugung elektrischer Energie, umfassend:
einen Wärmetauscher (2101);
einen Kohlenwasserstoff-Spaltreaktor (2102);
einen Kohlenstoffabscheider (2100);
eine Kohlenstoff-Brennstoffzelle, DCFC (2103), umfassend eine Anode und ein Elektrolyt-Strömungsfeld; und
ein Fluidzirkulationssystem, gestaltet zum:
Zirkulieren einer Kohlenwasserstoff-Brennstoffquelle zu dem Wärmetauscher zum Erhitzen der Kohlenwasserstoff-Brennstoffquelle in dem Wärmetauscher;
Zirkulieren der erhitzten Kohlenwasserstoff-Brennstoffquelle zu dem Kohlenwasserstoff-Spaltreaktor zum Zersetzen der Kohlenwasserstoff-Brennstoffquelle zu Wasserstoff und Kohlenstoff;
Zirkulieren des Wasserstoffs und Kohlenstoffs zu dem Kohlenstoffabscheider zum Trennen des Kohlenstoffs von dem Wasserstoff;
Zirkulieren eines geschmolzenen Carbonatelektrolyts zu dem Kohlenstoffabscheider zum Mischen mit dem abgetrennten Kohlenstoff, um eine Aufschlämmung zu bilden;
Zirkulieren der Aufschlämmung zu dem Elektrolyt-Strömungsfeld der DCFC, um in der Anode der DCFC wenigstens etwas von in der Aufschlämmung enthaltenem Kohlenstoff in Kohlendioxid und elektrische Energie umzuwandeln, um eine kohlenstoffarme Aufschlämmung zu bilden;
Zirkulieren der kohlenstoffarmen Aufschlämmung weg von der DCFC; und
Zirkulieren von einem oder mehreren von der kohlenstoffarmen Aufschlämmung, dem geschmolzenen Carbonatelektrolyt und Kohlendioxid von der DCFC zu dem Wärmetauscher.

2. System nach Anspruch 1, wobei das Fluidzirkulationssystem ferner dafür gestaltet ist, den abgetrennten Wasserstoff zu einem Wasserstoffabscheider zur Reinigung des abgetrennten Wasserstoffs zu zirkulieren.

3. System nach Anspruch 1, wobei das Fluidzirkulationssystem ferner gestaltet ist zum: Zirkulieren der Aufschlämmung zu der Anode der DCFC.

4. System nach einem der Ansprüche 1-3, wobei das Fluidzirkulationssystem ferner gestaltet ist zum:
Halten von weiterem geschmolzenem Carbonatelektrolyt zwischen der Anode und einer Kathode der DCFC ohne Zirkulieren des weiteren geschmolzenen Carbonats.

5. System nach einem der Ansprüche 1-4, wobei das Fluidzirkulationssystem ferner dafür gestaltet ist, einen Elektrolyt in Kontakt mit der DCFC und getrennt zu der Aufschlämmung zu zirkulieren.

6. System nach einem der Ansprüche 1-5, wobei das Fluidzirkulationssystem ferner gestaltet ist zum:
Zirkulieren von zusätzlichem Kohlenstoff und der kohlenstoffarmen Aufschlämmung zu dem Kohlenstoffabscheider zum Mischen des zusätzlichen Kohlenstoffs mit der kohlenstoffarmen Aufschlämmung, um zusätzliche Aufschlämmung zu bilden; und
Zirkulieren der zusätzlichen Aufschlämmung zu der DCFC.

7. System nach einem der Ansprüche 1-6,
wobei das Fluidzirkulationssystem ferner dafür gestaltet ist, das Kohlendioxid und die kohlenstoffarme Aufschlämmung zu dem Wärmetauscher zu zirkulieren, um das Kohlendioxid und die kohlenstoffarme Aufschlämmung in dem Wärmetauscher zu kühlen.

8. System nach einem der Ansprüche 1-7, ferner umfassend:
eine Kohlenstoffentfernungsvorrichtung, gestaltet zum Entfernen des abgetrennten Kohlenstoffs aus dem geschmolzenen Carbonatelektrolyt in dem Kohlenstoffabscheider; und
eine Kohlenstoffüberführungsvorrichtung, gestaltet zum Überführen des entfernten Kohlenstoffs zu der DCFC.

9. System nach Anspruch 8, wobei die Kohlenstoffentfernungsvorrichtung ferner dafür gestaltet ist, den abgetrennten Kohlenstoff aus dem geschmolzenen Carbonatelektrolyt abzuschöpfen oder zu filtern.

10. System nach Anspruch 8 oder 9, wobei das Fluidzirkulationssystem ferner gestaltet ist zum:
Zirkulieren des geschmolzenen Karbonatelektrolyts aus der DCFC zu dem Kohlenstoffabscheider.

11. System nach einem der Ansprüche 8-10, wobei das Fluidzirkulationssystem ferner gestaltet ist zum:
vor Überführen des entfernten Kohlenstoffs zu der DCFC Zirkulieren des entfernten Kohlenstoffs und eines Brennstoffvermittlers zu dem Kohlenstoffabscheider zum Mischen darin; und
Zirkulieren des gemischten Kohlenstoffs und Brennstoffvermittlers zu der DCFC.

12. System nach einem der Ansprüche 1-11, ferner umfassend eine Kohlenstoffverarbeitungsvorrichtung zur Verarbeitung wenigstens eines Teils des abgetrennten Kohlenstoffs zur Ausgabe.

13. System nach Anspruch 12, wobei die Kohlenstoffverarbeitungsvorrichtung einen Reaktor zum Erhöhen der Aktivierung des wenigstens einen Teils des abgetrennten Kohlenstoffs, einen Pelletierer zum Pelletieren des wenigstens einen Teils des abgetrennten Kohlenstoffs, eine Presse oder einen Ofen umfasst.

14. Verfahren zur Erzeugung von Wasserstoff und zur Erzeugung elektrischer Energie, umfassend:
Heizen einer Kohlenwasserstoff-Brennstoffquelle in einem Wärmetauscher (2101);
Zersetzen der erhitzten Kohlenwasserstoff-Brennstoffquelle zu Wasserstoff und Kohlenstoff unter Verwendung eines Kohlenwasserstoff-Spaltreaktors (2102);
Trennen des Kohlenstoffs von dem Wasserstoff in einem Kohlenstoffabscheider (2100);
Mischen des abgetrennten Kohlenstoffs mit einem geschmolzenen Carbonatelektrolyt in dem Kohlenstoffabscheider, um eine Aufschlämmung zu bilden;
Erzeugen von elektrischer Energie aus dem abgetrennten Kohlenstoff durch Zirkulieren der Aufschlämmung zu einem Elektrolyt-Strömungsfeld einer Kohlenstoff-Brennstoffzelle, DCFC (2103);
wobei in einer Anode der DCFC wenigstens etwas an in der Aufschlämmung enthaltenem Kohlenstoff in Kohlendioxid und elektrische Energie umgewandelt wird, wodurch eine kohlenstoffarme Aufschlämmung gebildet wird;
Zirkulieren der kohlenstoffarmen Aufschlämmung weg von der DCFC; und
Zirkulieren von einem oder mehreren von der kohlenstoffarmen Aufschlämmung, dem geschmolzenen Carbonatelektrolyt und Kohlendioxid von der DCFC zu dem Wärmetauscher.

## Revendications

1. Système de production d'hydrogène et de génération d'énergie électrique, comprenant :
un échangeur de chaleur (2101) ;
un réacteur de dissociation d'hydrocarbures (2102) ;
un séparateur de carbone (2100) ;
une pile à combustible directe au carbone, DCFC, (2103) comprenant une anode et un champ d'écoulement d'électrolyte ; et
un système de circulation de fluide configuré pour :
faire circuler une source de combustible hydrocarboné vers l'échangeur de chaleur pour chauffer la source de combustible hydrocarboné dans l'échangeur de chaleur ;
faire circuler la source de combustible hydrocarboné chauffée vers le réacteur de dissociation d'hydrocarbures pour décomposer la source de combustible hydrocarboné en hydrogène et en carbone ;
faire circuler l'hydrogène et le carbone vers le séparateur de carbone pour séparer le carbone de l'hydrogène ;
faire circuler un électrolyte de carbonate fondu dans le séparateur de carbone pour le mélanger avec le carbone séparé pour former une suspension ;
faire circuler la suspension dans le champ d'écoulement d'électrolyte de la DCFC pour convertir dans l'anode de la DCFC au moins une partie du carbone contenu dans la suspension en dioxyde de carbone et en énergie électrique, formant ainsi une suspension appauvrie en carbone ;
faire circuler la suspension appauvrie en carbone loin de la DCFC ; et
faire circuler une ou plusieurs parmi la suspension appauvrie en carbone, l'électrolyte de carbonate fondu et le dioxyde de carbone de la DCFC vers l'échangeur de chaleur.

2. Système selon la revendication 1, dans lequel le système de circulation de fluide est en outre configuré pour faire circuler l'hydrogène séparé vers un séparateur d'hydrogène pour purifier l'hydrogène séparé.

3. Système selon la revendication 1, dans lequel le système de circulation de fluide est en outre configuré pour :
faire circuler la suspension vers l'anode de la DCFC.

4. Système selon l'une quelconque des revendications 1 à 3, dans lequel le système de circulation de fluide est en outre configuré pour :
maintenir un électrolyte de carbonate fondu supplémentaire entre l'anode et une cathode de la DCFC sans faire circuler le carbonate fondu supplémentaire.

5. Système selon l'une quelconque des revendications 1 à 4, dans lequel le système de circulation de fluide est en outre configuré pour faire circuler un électrolyte en contact avec la DCFC et séparément à la suspension.

6. Système selon l'une quelconque des revendications 1 à 5, dans lequel le système de circulation de fluide est en outre configuré pour :
faire circuler le carbone supplémentaire et la suspension appauvrie en carbone dans le séparateur de carbone pour mélanger le carbone supplémentaire avec la suspension appauvrie en carbone afin de former une suspension supplémentaire ; et
faire circuler la suspension supplémentaire vers la DCFC.

7. Système selon l'une quelconque des revendications 1 à 6,
dans lequel le système de circulation de fluide est en outre configuré pour faire circuler le dioxyde de carbone et la suspension appauvrie en carbone vers l'échangeur de chaleur afin de refroidir le dioxyde de carbone et la suspension appauvrie en carbone dans l'échangeur de chaleur.

8. Système selon l'une quelconque des revendications 1 à 7, comprenant en outre :
un dispositif d'élimination de carbone configuré pour éliminer le carbone séparé de l'électrolyte de carbonate fondu dans le séparateur de carbone ; et
un dispositif de transfert de carbone configuré pour transférer le carbone éliminé vers la DCFC.

9. Système selon la revendication 8, dans lequel le dispositif d'élimination de carbone est en outre configuré pour écumer ou filtrer le carbone séparé de l'électrolyte de carbonate fondu.

10. Système selon la revendication 8 ou 9, dans lequel le système de circulation de fluide est en outre configuré pour :
faire circuler l'électrolyte de carbonate fondu de la DCFC vers le séparateur de carbone.

11. Système selon l'une quelconque des revendications 8 à 10, dans lequel le système de circulation de fluide est en outre configuré pour :
avant le transfert du carbone éliminé vers la DCFC, faire circuler le carbone éliminé et un médiateur de combustible vers le séparateur de carbone pour un mélange dans celui-ci ; et
faire circuler le carbone mélangé et le médiateur de combustible vers la DCFC.

12. Système selon l'une quelconque des revendications 1 à 11, comprenant en outre un appareil de traitement de carbone pour traiter au moins une partie du carbone séparé pour exportation.

13. Système selon la revendication 12, dans lequel l'appareil de traitement de carbone comprend un réacteur pour augmenter l'activation de l'au moins une partie du carbone séparé, un dispositif de mise en pastilles pour mettre en pastilles l'au moins une partie du carbone séparé, une presse, ou un four.

14. Procédé de production d'hydrogène et de génération d'énergie électrique, comprenant :
le chauffage d'une source de combustible hydrocarboné dans un échangeur de chaleur (2101) ;
la décomposition de la source de combustible hydrocarboné chauffée en hydrogène et en carbone au moyen d'un réacteur de dissociation d'hydrocarbures (2102) ;
la séparation du carbone de l'hydrogène dans un séparateur de carbone (2100) ;
le mélange, dans le séparateur de carbone, du carbone séparé avec un électrolyte de carbonate fondu pour former une suspension ;
la génération d'énergie électrique à partir du carbone séparé en faisant circuler la suspension dans un champ d'écoulement d'électrolyte d'une pile à combustible directe au carbone, DCFC, (2103) ;
dans lequel, dans une anode de la DCFC, au moins une partie du carbone contenu dans la suspension est convertie en dioxyde de carbone et en énergie électrique, formant ainsi une suspension appauvrie en carbone ;
l'action de faire circuler la suspension appauvrie en carbone loin de la DCFC ; et
l'action de faire circuler un ou plusieurs parmi la suspension appauvrie en carbone, l'électrolyte de carbonate fondu, et le dioxyde de carbone de la DCFC vers l'échangeur de chaleur.
